(19) Europäisches Patentamt
European Patent Office
Office européen des brevets

(11) EP 3 330 901 A1

(12) EUROPEAN PATENT APPLICATION

(43) Date of publication:
06.06.2018 Bulletin 2018/23

(51) Int Cl.:
G06N 3/08 (2006.01)         G06N 5/02 (2006.01)
G06N 3/04 (2006.01)

(21) Application number: 17169689.1

(22) Date of filing: 05.05.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 05.12.2016 IN 201621041570

(71) Applicant: Tata Consultancy Services Limited
Maharashtra (IN)

(72) Inventors:
• SAIKIA, SARMIMALA
  201 309 Noida - UP (IN)
• Vig, Lovekesh
  122003 Gurgaon - Haryana (IN)
• SHROFF, GAUTAM
  122003 Gurgaon - Haryana (IN)
• AGARWAL, PUNEET
  201 309 Noida - UP (IN)
• Rawat, Richa
  201 309 Noida - UP (IN)
• Srinivasan, Ashwin
  GOA 403 726 Zuarinaga (IN)

(74) Representative: Goddar, Heinz J.
Boehmert & Boehmert
Anwaltspartnerschaft mbB
Pettenkoferstrasse 22
80336 München (DE)

(54) TRAINING INDUCTIVE LOGIC PROGRAMMING ENHANCED DEEP BELIEF NETWORK MODELS FOR DISCRETE OPTIMIZATION

(57) System and method for training inductive logic programming enhanced deep belief network models for discrete optimization are disclosed. The system initializes (i) a dataset comprising values and (ii) a pre-defined threshold, partitions the values into a first set and a second set based on the pre-defined threshold. Using Inductive Logic Programming (ILP) engine and a domain knowledge associated with the dataset, a machine learning model is constructed on the first set and the second set to obtain Boolean features, and using the Boolean features that are being appended to the dataset, a deep belief network (DBN) model is trained to identify an optimal set of values between the first set and the second set. Using the trained DBN model, the optimal set of values are sampled to generate samples. The pre-defined threshold is adjusted based on the generated samples, and the steps are repeated to obtain optimal samples.

Initializing (i) a dataset comprising a plurality of values and (ii) a pre-defined threshold ⌐ 202

Partitioning the plurality of values into a first set of values and a second set of values based on the pre-defined threshold ⌐ 204

Constructing, using (i) an Inductive Logic Programming and (ii) a domain knowledge associated with the dataset, a machine learning model on each of the first set of values and the second set of values to obtain one or more Boolean features ⌐ 206

Training, using the one or more Boolean features that are being appended to the dataset, a deep belief network (DBN) model to identify an optimal set of values between the first set of values and the second set of values ⌐ 208

Sampling, using the trained DBN model, the optimal set of values to generate one or more samples ⌐ 210

FIG. 2

**Description**

CROSS-REFERENCE TO RELATED APPLICATIONS AND PRIORITY

This patent application claims priority to India Patent Application 201621041570, filed on December 5, 2016.

TECHNICAL FIELD

The disclosure herein generally relates to Neuro-symbolic optimization, and, more particularly, to training inductive logic programming enhanced deep belief network models for discrete optimization.

BACKGROUND

There are several real-world planning problems for which domain knowledge is qualitative, and not easily encoded in a form suitable for numerical optimization. Here, for instance, are some guiding principles that are followed by the Australian Rail Track Corporation when scheduling trains: (1) If a healthy Train is running late, it should be given equal preference to other healthy Trains; (2) A higher priority train should be given preference to a lower priority train, provided the delay to the lower priority train is kept to a minimum; and so on. It is evident from this that train-scheduling may benefit from knowing if a train is healthy, what a trains priority is, and so on. But are priorities and train-health fixed, irrespective of the context? What values constitute acceptable delays to a low-priority train? Generating good train-schedules do require a combination of quantitative knowledge of train running times and qualitative knowledge about the train in isolation, and in relation to other trains.

Usually Estimation of Distribution Algorithms (EDAs) have used generative probabilistic models, such as Bayesian Networks, where domain-knowledge needs to be translated into prior distributions and/or network topology. However, there are some problems for which such a translation is generally not evident. Recent work has shown that Inductive Logic Programming (ILP) models have generated better solutions in each EDA iteration. However, efficient sampling is not straightforward and ILP is unable to utilize the discovery of high level features as efficiently as deep generative models.

SUMMARY

Embodiments of the present disclosure present technological improvements as solutions to one or more of the above-mentioned technical problems recognized by the inventors in conventional systems. For example, in one aspect, a processor implemented method for training inductive logic programming enhanced deep belief network models for discrete optimization is provided. The method comprising: (a) initializing (i) a dataset comprising a plurality of values and (ii) a pre-defined threshold; (b) partitioning the plurality of values into a first set of values and a second set of values based on the pre-defined threshold; (c) constructing, using (i) an Inductive Logic Programming (ILP) and (ii) a domain knowledge associated with the dataset, a machine learning model on each of the first set of values and the second set of values to obtain one or more Boolean features; (d) training, using the one or more Boolean features that are being appended to the dataset, a deep belief network (DBN) model to identify an optimal set of values between the first set of values and the second set of values; and (e) sampling, using the trained DBN model, the optimal set of values to generate one or more samples.

In an embodiment, the method may further include adjusting, using the one or more generated samples, value of the pre-defined threshold and repeating steps (b) till (e) until an optimal sample is generated. In an embodiment, the step of partitioning the plurality of values into a first set of values and a second set of values based on the pre-defined threshold comprises performing a comparison of each value from the plurality of values with the pre-defined threshold. In an embodiment, the first set of values are values lesser than or equal to the pre-defined threshold. In an embodiment, the second set of values are values greater than the pre-defined threshold.

In another aspect, a system training inductive logic programming enhanced deep belief network models for discrete optimization is provided. The system comprising: a memory storing instructions; one or more communication interfaces; and one or more hardware processors communicatively coupled to the memory via the one or more communication interfaces, wherein the one or more hardware processors are configured by the instructions to (a) initialize (i) a dataset comprising a plurality of values and (ii) a pre-defined threshold; (b) partition the plurality of values into a first set of values and a second set of values based on the pre-defined threshold; (c) construct, using (i) an Inductive Logic Programming (ILP) and (ii) a domain knowledge associated with the dataset, a machine learning model on each of the first set of values and the second set of values to obtain one or more Boolean features; (d) train, using the one or more Boolean features that are being appended to the dataset, a deep belief network (DBN) model to identify an optimal set of values between the first set of values and the second set of values; and (e) sample, using the trained DBN model, the optimal set of values to generate one or more samples.

In an embodiment, the one or more hardware processors are further configured to adjust, using the one or more generated samples, value of the pre-defined threshold and repeat steps (b) till (e) until an optimal sample is generated. In an embodiment, the plurality of values are partitioned into the first set of values and the second set of values by performing a comparison of each value from the plurality of values with the pre-defined threshold. In an embodiment, the first set of values are values lesser than or equal to the pre-defined threshold. In an embodiment, the second set of values are values greater than the pre-defined threshold.

In yet another aspect, one or more non-transitory machine readable information storage mediums comprising one or more instructions is provided. The one or more instructions which when executed by one or more hardware processors causes (a) initializing (i) a dataset comprising a plurality of values and (ii) a pre-defined threshold; (b) partitioning the plurality of values into a first set of values and a second set of values based on the pre-defined threshold; (c) constructing, using an Inductive Logic Programming (ILP) and a domain knowledge associated with the dataset, a machine learning model on each of the first set of values and the second set of values to obtain one or more Boolean features; (d) training, using the one or more Boolean features that are being appended to the dataset, a deep belief network (DBN) model to identify an optimal set of values between the first set of values and the second set of values; and (e) sampling, using the trained DBN model, the optimal set of values to generate one or more samples.

In an embodiment, the instructions may further cause adjusting, using the one or more generated samples, value of the pre-defined threshold and repeating steps (b) till (e) until an optimal sample is generated. In an embodiment, the step of partitioning the plurality of values into a first set of values and a second set of values based on the pre-defined threshold comprises performing a comparison of each value from the plurality of values with the pre-defined threshold. In an embodiment, the first set of values are values lesser than or equal to the pre-defined threshold. In an embodiment, the second set of values are values greater than the pre-defined threshold.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for training Inductive Logic Programming (ILP) enhanced Deep Belief Network (DBN) models for discrete optimization.
FIG. 2 illustrates an exemplary flow diagram of a processor implemented method for training Inductive Logic Programming (ILP) enhanced Deep Belief Network (DBN) models for discrete optimization using the system of FIG. 1 to an embodiment of the present disclosure.
FIG. 3 illustrates sampling from a DBN (a) with just a separator variable (b) with ILP features according to an embodiment of the present disclosure.
FIG. 4A-4B depicts impact of ILP on EODS procedure for Job Shop (a) Distribution of solution Endtimes generated on iterations 1, 5, 10 and 13 with and without ILP (b) Cumulative semi-optimal solutions obtained with and without ILP features over 13 iterations according to an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

There are several real-world planning problems for which domain knowledge is qualitative, and not easily encoded in a form suitable for numerical optimization. Here, for instance, are some guiding principles that are followed by the Australian Rail Track Corporation when scheduling trains: (1) If a healthy Train is running late, it should be given equal preference to other healthy Trains; (2) A higher priority train should be given preference to a lower priority train, provided the delay to the lower priority train is kept to a minimum; and so on. It is evident from this that train-scheduling may benefit from knowing if a train is healthy, what a trains priority is, and so on. But are priorities and train-health fixed, irrespective of the context? What values constitute acceptable delays to a low-priority train? Generating good train-schedules requires a combination of quantitative knowledge of train running times and qualitative knowledge about the train in isolation, and in relation to other trains. In the present disclosure, a heuristic search method is proposed, that comes under the broad category of an estimation distribution algorithm (EDA). EDAs iteratively generate better solutions for the optimization problem using machine-constructed models. Usually EDAs have used generative probabilistic models, such as Bayesian Networks, where domain-knowledge needs to be translated into prior distributions and/or network topology. In this present disclosure, the embodiments deal with problems for which such a translation is not evident. The embodiments of the present disclosure particularly deal in ILP which presents perhaps one of the most flexible ways to use domain-knowledge when constructing models. Recent work has shown that ILP models incorporating background knowledge were able to generate better quality solutions in each EDA iteration. However, efficient sampling is not straightforward and ILP is unable to utilize the discovery of high level features as efficiently as deep generative models.

While neural models have been used for optimization, the embodiments of the present disclosure attempt to combine the sampling and feature discovery power of deep generative models with the background knowledge captured by ILP for optimization problems that require domain knowledge. The rule based features discovered by the ILP model are appended to the higher layers of a Deep Belief Network (DBN) while training. A subset of the features are then clamped on while sampling to generate samples consistent with the rules. This results in consistently improved sampling which has a cascading positive effect on successive iterations of EDA based optimization procedure.

The embodiments of the present disclosure provide systems and methods for training inductive logic programming enhanced deep belief network models for discrete optimization. The embodiments of the present disclosure enable investigation of solving discrete optimization problems using the 'estimation of distribution' (EDA) approach via a unique combination of deep belief networks (DBN) and Inductive logic programming (ILP). While DBNs are used to learn the structure of successively 'better' feasible solutions, ILP enables the incorporation of domain-based background knowledge related to the goodness of solutions. Recent work showed that ILP could be an effective way to use domain knowledge in an EDA scenario. However, in a purely ILP-based EDA, sampling successive populations is either inefficient or not straightforward. In the present disclosure of Neuro-symbolic EDA, an ILP engine is used to construct a model for good solutions using domain-based background knowledge. These rules are introduced as Boolean features in the (last) hidden layer of DBN models that are used for EDA-based optimization. This incorporation of logical ILP features requires some changes while training and sampling from DBNs: (a) the DBN models need to be trained with data for units at the input layer as well as some units in an otherwise hidden layer; and (b) the present disclosure and the embodiments herein draw the generated samples from instances entailed by the logical model. The embodiments demonstrate the viability of this approach on instances of two optimization problems: predicting optimal depth-of-win for the King-Rook and King (KRK) endgame, and job-shop scheduling. The results are effective and promising: (i) On each iteration of distribution estimation, samples obtained with an ILP-assisted DBN have a substantially greater proportion of good solutions than samples generated using a DBN without ILP features; and (ii) On termination of distribution estimation, samples obtained using an ILP-assisted DBN contain more near-optimal samples than samples from a DBN without ILP features. Taken together, these results suggest that the use of ILP-constructed theories could be useful for incorporating complex domain-knowledge into deep models for estimation distribution based procedures.

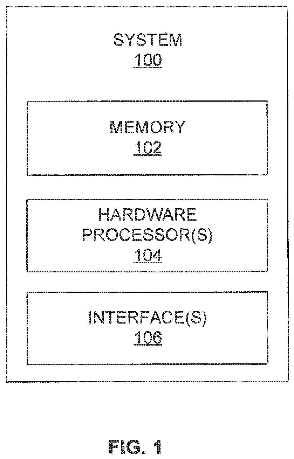

Referring now to the drawings, and more particularly to FIGS. 1 through 4, where similar reference characters denote corresponding features consistently throughout the figures, there are shown preferred embodiments and these embodiments are described in the context of the following exemplary system and/or method.

FIG. 1 illustrates an exemplary block diagram of a system 100 for training Inductive Logic Programming (ILP) enhanced Deep Belief Network (DBN) models for discrete optimization according to an embodiment of the present disclosure. In an embodiment, the system 100 includes one or more processors 104, communication interface device(s) or input/output (I/O) interface(s) 106, one or more data storage devices or memory 102 operatively coupled to the one or more processors 104, and a controller 108. Among other capabilities, the processor(s) is configured to fetch and execute computer-readable instructions stored in the memory. In an embodiment, the system 100 can be implemented in a variety of computing systems, such as workstations, servers, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, one or more modules (not shown) of the system 100 can be stored in the memory 102.

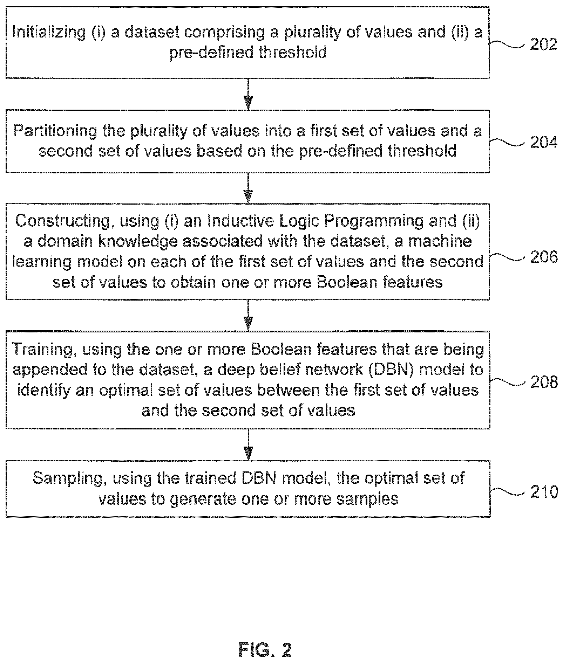

FIG. 2, with reference to FIG. 1, illustrates an exemplary flow diagram of a processor implemented method for training Inductive Logic Programming (ILP) enhanced Deep Belief Network (DBN) models for discrete optimization using the system 100 to an embodiment of the present disclosure. In an embodiment, the system 100 comprises one or more data storage devices or the memory 102 operatively coupled to the one or more hardware processors 104 wherein the one or more hardware processors 104 are configured to store instructions for execution of steps of the method. The steps of the method of the present disclosure will now be explained with reference to the components of the system 100 as depicted in FIG. 1, and the flow diagram. In an embodiment of the present disclosure, at step 202, the one or more hardware processors 104 initialize (i) a dataset comprising a plurality of values and (ii) a pre-defined threshold. The plurality of values and the pre-defined threshold are specific to an application (or domain, in an example embodiment. In an embodiment of the present disclosure, at step 204, the one or more hardware processors 104 partition (or divide) the plurality of values into a first set of values and a second set of values based on the pre-defined threshold. In an embodiment of the present disclosure, the plurality of values are partitioned into the first set of values and the second set of values based on the pre-defined threshold by performing a comparison of each value from the plurality of values with the pre-defined threshold. In an embodiment, the first set of values are values lesser than or equal to the pre-defined threshold. In an embodiment, the second set of values are values greater than the pre-defined threshold.

In an embodiment of the present disclosure, at step 206, the one or more hardware processors 104 construct, using (i) an Inductive Logic Programming (an ILP engine) and (ii) a domain knowledge associated with the dataset, a machine learning model on each of the first set of values and the second set of values to obtain one or more Boolean features. In an embodiment of the present disclosure, the system 100 constructs using (i) an Inductive Logic Programming (an ILP engine) and (ii) a domain knowledge associated with the dataset, the machine learning model on each of the first set of values and the second set of values to obtain one or more rules that are converted to the one or more Boolean features.

In an embodiment of the present disclosure, at step 208, the one or more hardware processors 104 train, using the one or more Boolean features that are being appended to the dataset, a deep belief network (DBN) model to identify an optimal set of values between the first set of values and the second set of values. In an embodiment of the present disclosure, training the DBN model enables the DBN model to identify good and not good (or bad) values between the first set of values and the second set of values. In an embodiment of the present disclosure, The rule based Boolean features that are obtained by the ILP engine are appended to one or more higher layers of the Deep Belief Network (DBN) model, in an example embodiment.

In an embodiment of the present disclosure, at step 210, the one or more hardware processors 104 sample, using the trained DBN model, the optimal set of values to generate one or more samples. In an embodiment of the present disclosure, the one or more hardware processors 104 adjust, using the one or more generated samples, value of the pre-defined threshold and the steps 204 till (210) are repeated until an optimal sample is generated.

Below is the implementation details along with experimental data of the embodiments of the present disclosure:

Estimation of Distribution Approach:

Assuming that the objective of the embodiments of the present disclosure is to minimize an objective function $F(x)$, where x is an instance from some instance-space $X$, the approach first constructs an appropriate machine-learning model to discriminate between samples of lower and higher value, i.e., $F(x) \leq \theta$ and $F(x) > \theta$, and then generates samples using this model, by way of following illustrative steps (EDOS procedure) of the method of FIG. 2:

    1. Initialize population $P$: = $\{x_i\}$; $\theta$: = $\theta_0$
    2. while not converged do

        a. for all $x_i$ in $P$ label ($x_i$) := 1 *if $F(x_i) \leq \theta$ else label ($x_i$)* := 0
        b. train DBN model $M$ to discriminate between 1 and 0 labels i.e., $P(x: label (x) = 1| M) > P(x: label (x) = 0| M)$
        c. regenerate $P$ by repeated sampling using model $M$
        d. reduce threshold $\theta$

    3. return P

Here the embodiments of the present disclosure implements Deep Belief Network (DBN) models for modeling the data distribution, and for generating samples for each iteration of MIMIC (Mutual information maximizing input clustering). Deep Belief Network (DBN) models are generative models that are composed of multiple latent variable models called Restricted Boltzman Machines (RBMs). In particular, as part of the proposed larger optimization algorithm, the DBN model is repeatedly trained and then sample the optimal values from the trained DBN model in order to reinitialize the sample population for the next iteration as outlined in the above illustrative steps. In order to accomplish this, while training a single binary unit (variable) is appended to the highest hidden layer of the DBN model, and a value 1 is assigned to it when the value of the sample is below $\theta$ and a value 0 if the value is above $\theta$. During training this variable, which is referred to as a separator variable, learns to discriminate between good and bad samples. To sample from a typical DBN using contrastive divergence, one would start by clamping the visible units to a data point and sampling the hidden unit values for the lowest level RBM. These values would then be treated as data for sampling the hidden units of the next higher layer and so on. At the highest layer Gibbs chain is executed before moving down the network while sampling the visible units, finally obtaining a sample at the original data layer. For the problem referred by the present disclosure, the separator variable is additionally clamped to 1 so as to bias the network to produce good samples, and preserve the DBN weights from the previous MIMIC iteration to be used as the initial weights for the subsequent iteration. This technique prevents retraining on the same data repeatedly as the training data for one iteration subsumes the samples from the previous iteration.

Below provides an overview of how ILP engines can assist DBNs constructed for this purpose:

The field of Inductive Logic Programming (ILP) has made steady progress over the years, in advancing the theory, implementation and application of logic-based relational learning. A characteristic of this form of machine-learning is that data, domain knowledge and models are usually - but not always - expressed in a subset of first-order logic, namely logic programs. It is evident that the use of some variant of first-order logic enable the automatic construction of models that use relations (used here in the formal sense of a truth value assignment to n-tuples). The embodiments of the present disclosure shows interest in a form of relational learning concerned with the identification of functions (again used formally, in the sense of being a uniquely defined relation) whose domain is the set of instances in the data. An example is the construction of new features for data analysis based on existing relations ("$f(m) = 1$ if a molecule m has 3 or more benzene rings fused together otherwise $f(m) = 0$": here concepts like benzene rings and connectivity of rings are generic relations provided in background knowledge).

Below is an overview of Inductive Logic Programming assisted Deep Belief Network Models:

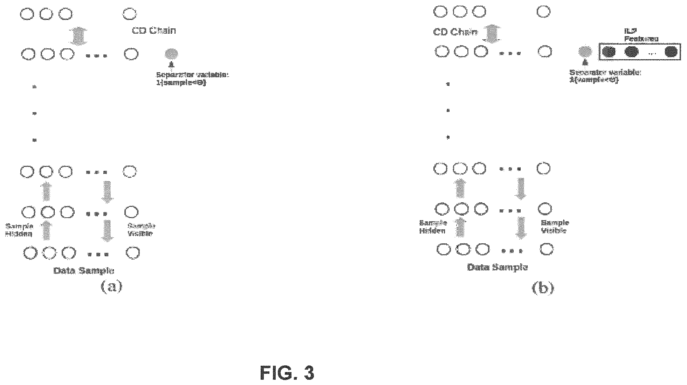

Given some data instances $x$ drawn from a set of instances $X$ and domain-specific background knowledge, assuming the ILP engine (model) is used to construct a model for discriminating between two classes (for simplicity, called good and bad). The ILP engine constructs a model for good instances using rules of the form $h_j$: $Class(x; good)$ $\leftarrow Cp_j(x)$. $Cp_j: X \rightarrow \{0,1\}$ denotes a "context predicate". A context predicate corresponds to a conjunction of literals that evaluates to TRUE (1) or FALSE (0) for any element of $X$. For meaningful features it is required that a $Cp_j$ contain at least one literal; in logical terms, it is therefore required that the corresponding $h_j$ to be definite clauses with at least two literals. A rule $h_j$: $Class(x; good) \leftarrow Cp_j(x)$, is converted to a feature $f_j$ using a one-to-one mapping as follows: $f_j(x) = 1$ *if* $Cp_j(x) = 1$ (*and 0 otherwise*). This function is denoted as *Feature*. Thus $Feature(h_j) = f_j$, $Feature^{-1}(f_j) = (h_j)$. It is sometimes referred to as $Feature(H) = \{f : h \in H \text{ and } f = Feature(h)\}$ *and* $Rules(F) = \{h: f \in F \text{ and } h = Feature^{-1}(f)\}$.
Each rule in an ILP engine is thus converted to a single Boolean feature, the model results in a set of Boolean features. Referring now to the illustrative steps (see steps 1-3), the ILP model(s) are constructed for discriminating between $F(x) \leq \theta$ (good) and $F(x) > \theta$ (not good). Conceptually, the ILP-features are treated as high-level features for a deep belief network model, and the data layer of the highest level RBM is appended with the values of the ILP-features for each sample as shown in FIG. 3. More specifically, FIG. 3, with reference to FIGS. 1-2, illustrates sampling from a DBN (a) with just a separator variable (b) with ILP features according to an embodiment of the present disclosure.

Sampling from Logical Model:

Prior works have suggested that if samples can be drawn from the success-set of the ILP-constructed model, then the efficiency of identifying near optimal solutions could be significantly enhanced. A straightforward approach of achieving this with an ILP-assisted DBN model (or ILP enhanced DBN model) would appear to be to clamp all the ILP-features, since this would bias the samples from the network to sample from the intersection of the success-sets of the corresponding rules (it is evident that instances in the intersection are guaranteed to be in the success-set sought). However this ends up being unduly restrictive, since samples sought are not ones that satisfy all rules, but at least one rule in the model. The obvious modification would be clamp subsets of features. But not all sample from a subset of features may be appropriate.
With a subset of features clamped (or being appended), there is an additional complication that arises due to the stochastic nature of the DBN's hidden units (or layers). This makes it possible for the DBN's unit corresponding to a logical feature $f_j$ to have the value 1 for an instance $x_i$, but for $x_i$ not to be entailed by the background knowledge and logical rule $h_j$.
In turn, this means that for a feature-subset with values clamped, samples may be generated from outside the success-set of corresponding rules involved. Given background knowledge $B$, a sample instance $x$ generated by clamping a set of features $F$ is aligned to $H = Rules(F)$, if $B \wedge H = x$ (that is, $x$ is entailed by $B$ and $H$). A procedure to bias sampling of instances from the success-set of the logical model constructed by ILP is illustrated by way of exemplary steps below.
Given: Background knowledge $B$; a set of rules $H = \{h_1, h_{2,...}, h_N\}l$; a DBN with $F = \{f_1, f_{2,...}, f_N\}$ as high-level features ($f_i = Feature(h_i)$); and a sample size $M$

Return: A set of samples $\{x_1, x_{2,..}, x_M\}$ drawn from the success-set of $B \wedge H$.

1. $S := \emptyset$, $k = 0$
2. while $|k| \leq N$ do

    a. Randomly select a subset $F_k$ of size $k$ features from F
    b. Generate a small sample set of $X$ clamping features in $F_k$
    c. For each sample in $x \in X$ and each rule $h_j$, set $count_k = 0$ i. If $x \in sucess$ - $set$ where $(f_j(x) = 1)$ => $(x \in sucess$ - $set(B$ and $h_j))$

$$count_k = count_k + 1$$

3. Generate $S$ by clamping $k$ features where $count_k$ = max($count_1$, $count_2$ ... $count_N$)
4. Return S

Empirical Evaluation

The aim in the present disclosure in the empirical evaluation are to investigate the following conjectures:

1) On each iteration, the EODS procedure yields better samples with ILP features than without.
2) On termination, the EODS procedure yields more near-optimal instances with ILP features than without.
3) Both procedures do better than random sampling from the initial training set.

It is relevant here to clarify the comparisons that are intended in the statements above. Conjecture 1) is essentially a statement about the gain in precision obtained by using ILP features. Let us denote $Pr(F(x) \leq \theta)$ the probability of generating an instance x with cost at most $\theta$ without ILP features to guide sampling, and by $Pr(F(x) \leq \theta) | M_{k,B})$ the probability of obtaining such an instance with ILP features $M_{k,B}$ obtained on iteration $k$ of the above EODS procedure using some domain-knowledge B. Note, if $M_{k,B} = \emptyset$, then it is meant $Pr(F(x) \leq \theta) | M_{k,B}) = Pr(F(x) \leq \theta))$. Then for 1) to hold, it is required that $PrF(x) \leq \theta_k | M_{k,B}) > Pr(F(x) \leq \theta_k)$, given some relevant B. The probability is estimated on the left hand side from the sample generated using the model, and the probability on the right hand side from the datasets provided. Conjecture 2) is related to the gain in recall obtained by using the model, although, it is more practical to examine actual number of near-optimal instances (true-positives in the usual terminology). The number of near-optimals in the sample generated by the DBN model with ILP features, to those obtained using the DBN model alone.

Experimental Data:

Two synthetic datasets were used, one arising from the KRK chess endgame (an endgame with just White King, White Rook, and Black King on the board), and the other a restricted, but nevertheless hard 5x5 job-shop scheduling (scheduling 5 jobs taking varying lengths of time onto 5 machines, each capable of processing just one task at a time).
The optimization problem that is examined here for the KRK endgame is to predict the depth-of-win with optimal play. Although aspect of the endgame has not been as popular in ILP as task of predicting "White-to-move position is illegal", it offers a number of advantages as a Drosophila for optimization problems of the kind that are of interest. First, as with other chess endgames, KRK-win is a complex, enumerable domain for which there is complete, noise-free data. Second, optimal "costs" are known for all data instances. Third, the problem has been studied by chess experts at least since Torres y Quevado built a machine, in 1910, capable of playing the KRK endgame. This resulted in substantial amount of domain-specific knowledge. It suffices to treat the problem as a form of optimization, with the cost being the depth-of-win with Black-to-move, assuming minimax-optimal play. In principle, there are $64^3 \approx 260,000$ possible positions for the KRK endgame, which are not all legal. Removing illegal positions, and redundancies arising from symmetries of the board reduces the size of the instance space to about 28,000 and the distribution shown in below Table 1.

Table 1

| Cost | Instances | Cost | Instances |
|------|-----------|------|-----------|
| 0 | 27 (0.001) | 9 | 1712 (0.196) |
| 1 | 78 (0.004) | 10 | 1985 (0.267) |
| 2 | 246 (0.012) | 11 | 2854 (0.368) |

(continued)

| Cost | Instances | Cost | Instances |
|------|-----------|------|-----------|
| 3 | 81 (0.015) | 12 | 3597 (0.497) |
| 4 | 198 (0.022) | 13 | 4194 (0.646) |
| 5 | 471 (0.039) | 14 | 4553 (0.808) |
| 6 | 592 (0.060) | 15 | 2166 (0.886) |
| 7 | 683 (0.084) | 16 | 390 (0.899) |
| 8 | 1433 (0.136) | draw | 2796 (1.0) |
| Total instances: 28056 | | | |

The sampling task here is to generate instances with depth-of-win equal to 0. Simple random sampling has a probability of about 1/1000 of generating such an instance once redundancies are removed.

The job-shop scheduling problem is less controlled than the chess endgame, but is nevertheless representative of many real-life applications (like scheduling trains), and in general, is known to be computationally hard.

Data instances for Chess are in the form of 6-tuples, representing the rank and file (X and Y values) of the 3 pieces involved. For the RBM, these are encoded as 48 dimensional binary vector where every eight bits represents a one hot encoding of the pieces' rank or file. At each iteration $k$ of the EODS procedure, some instances with depth-of-win $\leq \theta_k$ and the rest with depth-of-win $> \theta_k$ are used to construct the ILP model, and the resulting features are appended to train the RBM model as described above.

Data instances for Job-Shop are in the form of schedules, with associated start- and end-times for each task on a machine, along with the total cost of the schedule. On iteration $i$ of the EODS procedure, models are to be constructed to predict if the cost of schedule will be $\leq \theta_i$ or otherwise. Table 2 illustrates for job-shop scheduling.

| Cost | Instances | Cost | Instances |
|------|-----------|------|-----------|
| 400-500 | 10(0.0001) | 1000-1100 | 24067 (0.748) |
| 500-600 | 294 (0.003) | 1100-1200 | 15913 (0.907) |
| 600-700 | 2186 (0.025) | 1200-1300 | 7025 (0.978) |
| 700-800 | 7744 (0.102) | 1300-1400 | 1818 (0.996) |
| 800-900 | 16398 (0.266) | 1400-1500 | 345 (0.999) |
| 900-1000 | 24135 (0.508) | 1500-1700 | 66 (1.0) |
| Total instances: 100000 | | | |

Above tables 1 and 2 depict distribution of cost values. The numbers in parenthesis are cumulative frequencies.

Background Knowledge:

For Chess, background predicates encode the following (WK denotes, WR the White Rook, and BK the Black King): (a) Distance between pieces WK-BK, WK-BK, WK-WR; (b) File and distance patterns: WR-BK, WK-WR, WK-BK; (c) "Alignment distance": WR-BK; (d) Adjacency patterns: WK-WR, WK-BK, WR-BK; (e) "Between" patterns: WR between WK and BK, WK between WR and BK, BK between WK and WR; (f) Distance to closest edge: BK; (g) Distance to closest corner: BK; (h) Distance to centre: WK; and (i) Inter-piece patterns: Kings in opposition, Kings almost-in-opposition, L-shaped pattern. Prior research has been worked upon that deals with the history of using these concepts, and their definitions. A sample rule generated for Depth<=2 is that the distance between the files of the two kings be greater than or equal to zero, and that the ranks of the kings are separated by a distance of less than five and those of the white king and the rook by less than 3.

For Job-Shop, background predicates encode: (a) schedule job J "early" on machine M (early means first or second); (b) schedule job J "late" on machine M (late means last or second-last); (c) job J has the fastest task for machine M; (d) job J has the slowest task for machine M; (e) job J has a fast task for machine M (fast means the fastest or second-fastest); (f) Job J has a slow task for machine M (slow means slowest or second-slowest); (g) Waiting time for machine M; (h) Total waiting time; (i) Time taken before executing a task on a machine. Correctly, the predicates for (g)-(i) encode upper and lower bounds on times, using the standard inequality predicates $\leq$ and $\geq$.

The following details are relevant:

The sequence of thresholds for Chess are (8, 4, 2, 0). For Job-Shop, this sequence is (900, 890, 880...600). Thus, $\theta^* = 0$ for Chess and 600 for Job-Shop, which means exactly optimal solutions are required for Chess.

Experience with the use of ILP model used here (Aleph) suggests that the most sensitive parameter is the one defining a lower-bound on the precision of acceptable clauses (the minacc setting in Aleph). Experimental results obtained with minacc = 0:7, which has been used in previous experiments with the KRK dataset. The background knowledge for Job-Shop does not appear to be sufficiently powerful to allow the identification of good theories with short clauses. That is, the usual Aleph setting of upto 4 literals per clause leaves most of the training data un-generalised. It is therefore allowed to an upper-bound of upto 10 literals for Job-Shop, with a corresponding increase in the number of search nodes to 10000 (Chess uses the default setting of 4 and 5000 for these parameters).

In the EODS procedure, the initial sample is obtained using a uniform distribution over all instances. Let's say $P_o$. On the first iteration of EODS (k = 1), the datasets $E_1^+$ and $E_1^-$ are obtained by computing the (actual) costs for instances in $P_o$, and an ILP model $M_{1,B}$, or simply $M_1$, constructed. A DBN model is constructed both with and without ILP features. The samples are obtained from the DBN with $CD_6$ or by running the Gibbs chain for six iterations. On each iteration k, an estimate of $Pr(F(x) \leq \theta_k)$ can be obtained from the empirical frequency distribution of instances with values $\leq \theta_k$ and $> \theta_k$. For the synthetic problems here, these estimates are in above Tables 1 and 2. For $Pr(F(x) \leq \theta) |M_{k,B})$, obtain the frequency of $F(x) \leq \theta_k$ in $P_k$ is used.

It will be recognized that the ratio of $Pr(F(x) \leq \theta) |M_{k,B})$ to $Pr(F(x) \leq \theta_k)$ is equivalent to computing the gain in precision obtained by using an ILP model over a non-ILP model. Specifically, if this ratio is approximately 1, then there is no value in using the ILP model. The probabilities computed also provide one way of estimating sampling efficiency of the models (the higher the probability, the fewer samples will be needed to obtain an instance x with $F(x) \leq \theta_k$.

Results:

Results relevant to conjectures 1) and 2) are tabulated in below tables 3, 4, 5, and 6 for Chess and Job-Shop respectively.

Table 3 (Chess)

| Model | $Pr(F(x) \leq \theta_k) |M_k)$ | | | |
|---|---|---|---|---|
| | k=1 | k=2 | k=3 | k=4 |
| None | 0.134 | 0.042 | 0.0008 | 0.0005 |
| DBN | 0.220 | 0.050 | 0.015 | 0.0008 |
| DBN-ILP | 0.345 | 0.111 | 0.101 | 0.0016 |

Table 4 (Job-Shop)

| Model | $Pr(F(x) \leq \theta_k) |M_k)$ | | | |
|---|---|---|---|---|
| | k=1 | k=2 | k=3 | k=4 |
| None | 0.040 | 0.036 | 0.029 | 0.024 |
| DBN | 0.209 | 0.234 | 0.248 | 0.264 |
| DBN-ILP | 0.256 | 0.259 | 0.268 | 0.296 |

Probabilities of obtaining good instances x for each iteration k of the EODS procedure. That is, the column k = 1 denotes $P(F(x) \leq \theta_1)$ after iteration 1; the column k = 2 denotes $P(F(x) \leq \theta_2)$ after iteration 2 and so on. In effect, this is an estimate of the precision when predicting $F(x) \leq \theta_k$. "None" in the model column stands for probabilities of the instances, corresponding to simple random sampling ($M_k = \emptyset$).

Table 5 (Chess)

| Model | Near-optimal instances | | | |
|---|---|---|---|---|
| | k=1 | k=2 | k=3 | k=4 |
| DBN | 5/27 | 11/27 | 11/27 | 12/27 |
| DBN-ILP | 0.345 | 0.111 | 0.101 | 0.0016 |

Table 6 (Job-Shop)

| Model | Near-optimal instances | | |
|---|---|---|---|
| | k=11 | k=12 | k=13 |
| ILP | 7/304 | 10/304 | 18/304 |
| DBN-ILP | 9/304 | 18/304 | 27/304 |

Fraction of near-optimal instances $F(x) \leq \theta^*$ generated on each iteration of EODS. In effect, this is an estimate of the recall (true-positive rate, or sensitivity) when predicting $F(x) \leq \theta^*$. The fraction a/b denotes that a instances of b are generated.

The principal conclusions that can be drawn from the results are illustrated below:

a) For both problems, and every threshold value $\theta_k$, the probabilty of obtaining instances with cost at most $\theta_k$ with ILP-guided RBM sampling is substantially higher than without ILP. This provides evidence that ILP-guided DBN sampling results in better samples than DBN sampling alone (Conjecture 1)

For both problems and every threshold value $\theta_k$, samples obtained with ILP-guided sampling contains a substantially higher number of near-optimal instances than samples obtained using a DBN alone (Conjecture 2).

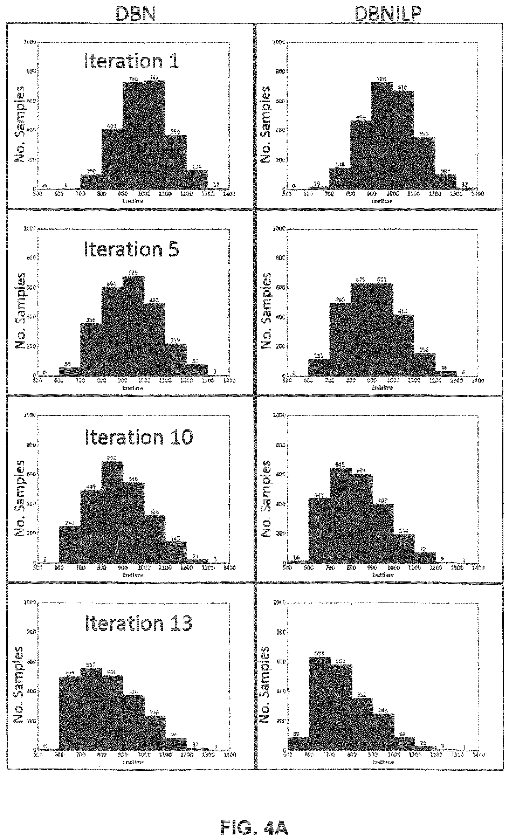

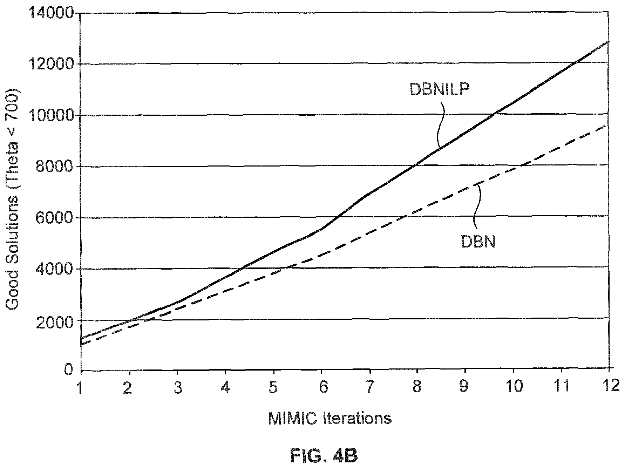

Additionally, FIG. 4A-4B demonstrate the cumulative impact of ILP on (a) the distribution of good solutions obtained and (b) the cascading improvement over the DBN alone for the Job Shop problem according to an embodiment of the present disclosure. The DBN with ILP was able to arrive at the optimal solution within 10 iterations. More specifically, FIG. 4A-4B depicts impact of ILP on EODS procedure for Job Shop (a) Distribution of solution Endtimes generated on iterations 1, 5, 10 and 13 with and without ILP (b) Cumulative semi-optimal solutions obtained with and without ILP features over 13 iterations according to an embodiment of the present disclosure.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, BLU-RAYs, DVDs, flash drives, disks, and any other known physical storage media.

It is intended that the disclosure and examples be considered as exemplary only, with a true scope and spirit of disclosed embodiments being indicated by the following claims.

**Claims**

1. A processor implemented method comprising:

   (a) initializing (i) a dataset comprising a plurality of values and (ii) a pre-defined threshold;
   (b) partitioning the plurality of values into a first set of values and a second set of values based on the pre-defined threshold;
   (c) constructing, using an Inductive Logic Programming (ILP) and a domain knowledge associated with the dataset, a machine learning model on each of the first set of values and the second set of values to obtain one or more Boolean features;
   (d) training, using the one or more Boolean features that are being appended to the dataset, a deep belief network (DBN) model to identify an optimal set of values between the first set of values and the second set of values; and
   (e) sampling, using the trained DBN model, the optimal set of values to generate one or more samples.

2. The processor implemented method of claim 1, further comprising adjusting, using the one or more generated samples, value of the pre-defined threshold and repeating steps (b) till (e) until an optimal sample is generated.

3. The processor implemented method of claim 1, wherein the step of partitioning the plurality of values into a first set of values and a second set of values based on the pre-defined threshold comprises performing a comparison of each value from the plurality of values with the pre-defined threshold.

4. The processor implemented method of claim 1, wherein the first set of values are values lesser than or equal to the pre-defined threshold.

5. The processor implemented method of claim 1, wherein the second set of values are values greater than the pre-defined threshold.

6. A system comprising:

   a memory storing instructions;
   one or more communication interfaces; and
   one or more hardware processors communicatively coupled to the memory via the one or more communication interfaces, wherein the one or more hardware processors are configured by the instructions to

# EP 3 330 901 A1

(a) initialize (i) a dataset comprising a plurality of values and (ii) a pre-defined threshold,
(b) partition the plurality of values into a first set of values and a second set of values based on the pre-defined threshold,
(c) construct, using an Inductive Logic Programming (ILP) and a domain knowledge associated with the dataset, a machine learning model on each of the first set of values and the second set of values to obtain one or more Boolean features,
(d) train, using the one or more Boolean features that are being appended to the dataset, a deep belief network (DBN) model to identify an optimal set of values between the first set of values and the second set of values, and
(e) sample, using the trained DBN model, the optimal set of values to generate one or more samples.

7. The system of claim 6, wherein the one or more hardware processors are further configured to adjust, using the one or more generated samples, value of the pre-defined threshold and repeat steps (b) till (e) until an optimal sample is generated.

8. The system of claim 6, the plurality of values are partitioned into the first set of values and the second set of values by performing a comparison of each value from the plurality of values with the pre-defined threshold.

9. The system of claim 6, wherein the first set of values are values lesser than or equal to the pre-defined threshold.

10. The system of claim 6, wherein the second set of values are values greater than the pre-defined threshold.

11. One or more non-transitory machine readable information storage mediums comprising one or more instructions which when executed by one or more hardware processors causes

(a) initializing (i) a dataset comprising a plurality of values and (ii) a pre-defined threshold;
(b) partitioning the plurality of values into a first set of values and a second set of values based on the pre-defined threshold;
(c) constructing, using an Inductive Logic Programming (ILP) and a domain knowledge associated with the dataset, a machine learning model on each of the first set of values and the second set of values to obtain one or more Boolean features;
(d) training, using the one or more Boolean features that are being appended to the dataset, a deep belief network (DBN) model to identify an optimal set of values between the first set of values and the second set of values; and
(e) sampling, using the trained DBN model, the optimal set of values to generate one or more samples.

12. The one or more non-transitory machine readable information storage mediums of claim 11, wherein the instructions further cause adjusting, using the one or more generated samples, value of the pre-defined threshold and repeating steps (b) till (e) until an optimal sample is generated.

13. The one or more non-transitory machine readable information storage mediums of claim 11, wherein the step of partitioning the plurality of values into a first set of values and a second set of values based on the pre-defined threshold comprises performing a comparison of each value from the plurality of values with the pre-defined threshold.

14. The one or more non-transitory machine readable information storage mediums of claim 11, wherein the first set of values are values lesser than or equal to the pre-defined threshold.

15. The one or more non-transitory machine readable information storage mediums of claim 11, wherein the second set of values are values greater than the pre-defined threshold.

SYSTEM
100

MEMORY
102

HARDWARE
PROCESSOR(S)
104

INTERFACE(S)
106

FIG. 1

Initializing (i) a dataset comprising a plurality of values and (ii) a pre-defined threshold ⌇ 202

Partitioning the plurality of values into a first set of values and a second set of values based on the pre-defined threshold ⌇ 204

Constructing, using (i) an Inductive Logic Programming and (ii) a domain knowledge associated with the dataset, a machine learning model on each of the first set of values and the second set of values to obtain one or more Boolean features ⌇ 206

Training, using the one or more Boolean features that are being appended to the dataset, a deep belief network (DBN) model to identify an optimal set of values between the first set of values and the second set of values ⌇ 208

Sampling, using the trained DBN model, the optimal set of values to generate one or more samples ⌇ 210

**FIG. 2**

FIG. 3

FIG. 4A

FIG. 4B

Europäisches
Patentamt

European
Patent Office

Office européen
des brevets

**EUROPEAN SEARCH REPORT**

Application Number

EP 17 16 9689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ASHWIN SRINIVASAN ET AL: "Generation of Near-Optimal Solutions Using ILP-Guided Sampling", ARXIV.ORG, CORNELL UNIVERSITY LIBRARY, 201 OLIN LIBRARY CORNELL UNIVERSITY ITHACA, NY 14853, 3 August 2016 (2016-08-03), XP080717941, * Title; Abstract; Sections 1-4; figures 1-2 * | 1-15 | INV.<br>G06N3/08<br>G06N5/02<br><br>ADD.<br>G06N3/04 |
| A | M Probst ET AL: "Deep Boltzmann Machines in Estimation of Distribution Algorithms for Combinatorial Optimization", , 13 June 2016 (2016-06-13), XP055433579, Retrieved from the Internet: URL:https://www.researchgate.net/profile/F ranz_Rothlauf/publication/282182028_Deep_B oltzmann_Machines_in_Estimation_of_Distrib ution_Algorithms_for_Combinatorial_Optimiz ation/links/575e99bc08aec91374b3db69/Deep- Boltzmann-Machines-in-Estimation-of-Distri bution-Algorithms-for-Combinatorial-Optimi zation.pdf [retrieved on 2017-12-08] * Title; Abstract; Sections 1-2; Algorithm 1; figure 1 * | 1-15 | |
| A | GEOFFREY E. HINTON ET AL: "A Fast Learning Algorithm for Deep Belief Nets", NEURAL COMPUTATION, vol. 18, no. 7, 1 July 2006 (2006-07-01), pages 1527-1554, XP055217715, ISSN: 0899-7667, DOI: 10.1162/neco.2006.18.7.1527 * Title, Abstract, Sections 1-5,7-8; figure 1 * | 1,6,11 | |

TECHNICAL FIELDS
SEARCHED       (IPC)

G06N
B61L
G06Q

-/--

The present search report has been drawn up for all claims

| Place of search | Date of completion of the search | Examiner |
|---|---|---|
| The Hague | 15 December 2017 | Szymanski, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 17 16 9689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SON N. TRAN ET AL: "Deep Logic Networks: Inserting and Extracting Knowledge From Deep Belief Networks", IEEE TRANSACTIONS ON NEURAL NETWORKS AND LEARNING SYSTEMS, 8 November 2016 (2016-11-08), pages 1-13, XP055418637, Piscataway, NJ, USA ISSN: 2162-237X, DOI: 10.1109/TNNLS.2016.2603784 * Title; Abstract; Sections 1,2,5; figure 5 * | 1,6,11 | |
| X,P | SARMIMALA SAIKIA ET AL: "Neuro-symbolic EDA-based Optimisation using ILP-enhanced DBNs", ARXIV.ORG, CORNELL UNIVERSITY LIBRARY, 201 OLIN LIBRARY CORNELL UNIVERSITY ITHACA, NY 14853, 20 December 2016 (2016-12-20), XP080741598, * the whole document * | 1-15 | |

TECHNICAL FIELDS
SEARCHED     (IPC)

The present search report has been drawn up for all claims

| Place of search | Date of completion of the search | Examiner |
|---|---|---|
| The Hague | 15 December 2017 | Szymanski, Francois |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 201621041570